## Europäisches Patentamt

## European Patent Office

## Office européen des brevets

(19)

(11) Veröffentlichungsnummer : **0 085 911**
**B1**

(12) **EUROPÄISCHE PATENTSCHRIFT**

(45) Veröffentlichungstag der Patentschrift :
26.03.86

(51) Int. Cl.⁴ : **G 11 B 23/02**

(21) Anmeldenummer : **83100787.7**

(22) Anmeldetag : **28.01.83**

(54) **Zusammensteckbare Halterung für mit Magnetbandkassetten belegte Etuis.**

(30) Priorität : **09.02.82 DE 3204336**

(43) Veröffentlichungstag der Anmeldung :
**17.08.83 Patentblatt 83/33**

(45) Bekanntmachung des Hinweises auf die Patenterteilung : **26.03.86 Patentblatt 86/13**

(84) Benannte Vertragsstaaten :
**DE FR GB IT NL**

(56) Entgegenhaltungen :
**DE-A- 2 145 718**
**DE-A- 2 335 965**
**DE-A- 2 343 487**
**DE-A- 2 807 347**
**DE-A- 2 820 606**
**DE-A- 2 928 267**
**FR-A- 2 401 783**
**GB-A- 2 063 651**
**US-A- 3 556 620**
**US-A- 3 635 350**

(73) Patentinhaber : **AGFA-GEVAERT Aktiengesellschaft**

**D-5090 Leverkusen 1 (DE)**

(72) Erfinder : **Lermann, Peter, Dr.**
**Naring 106 1/2**
**D-8152 Feldkirchen/Westerham (DE)**
Erfinder : **Schultheiss, Karl-Heinz**
**Ahornring 12**
**D-8028 Taufkirchen (DE)**
Erfinder : **Brendl, Fred**
**Ostpreussenstrasse 12**
**D-8012 Ottobrunn (DE)**

Jouve, 18, rue St-Denis, 75001 Paris, France

## Beschreibung

Die Erfindung betrifft eine zusammensteckbare Halterung für in Etuis eingelegte Magnetbandkassetten, insbesondere Kompaktkassetten, wobei das Etui an den beiden Schmalseiten nahe dem auf diesen Seiten angebrachten Etuischarnier oder zentrisch mit diesem mit Bohrungen versehen ist.

Magazine zur Aufbewahrung von Kassetten mit und ohne Etuis bestehen im allgemeinen aus offenen Behältern in Form von Kästen und Ständern, in denen die Kassetten eingelegt sind, oder die Etuis, in denen die Kassetten stecken, enthalten an den Außenflächen Mittel, sei es Schwalbenschwanzverbindungen, Klettfolien, wie sie beispielsweise in den Deutschen Gebrauchsmustern 72 45 588 und 75 37 705 beschrieben sind, mit denen sie untereinander lösbar verbunden werden können. Für die Benutzung derartiger Magazine, insbesondere in Kraftfahrzeugen, besteht der Nachteil, daß die Entnahme eines Etuis aus dem Behälter und der darin eingelegten Kassette nicht mit einer Hand erfolgen kann, was vor allem die Aufmerksamkeit des Fahrers im Straßenverkehr beeinträchtigt. Bei speziellen Automagazinen, wie sie beispielsweise in den Deutschen Gebrauchsmustern 79 08 606, 70 27 489 und 74 11 341 beschrieben sind, werden nur die Kassetten ohne Etuis in Sammelbehälter untergebracht. Hierbei besteht das Problem des Staubschutzes, da eine hermetische Absicherung der Kassette vor Verschmutzung nur in Etuis gewährleistet ist. Ferner sind noch aus den Deutschen Patentanmeldungen 23 43 487, 24 27 103 und 24 27 106 stapelbare Behälter bekannt, bei denen die Kassetten in Schubfächern gelagert sind und durch einen Schieber zur Entnahme freigegeben werden. Die Fertigungskosten derartiger Behälter mit ihren diversen Teilen sind jedoch relativ hoch. Hinzu kommt noch, daß das beim Kauf mitbezogene Etui mehr oder weniger überflüssig und weggeworfen wird. In der DE-OS 28 12 052 ist ferner ein Behälter für Magnetbandkassetten beschrieben, der zwar in seinen äußeren Abmessungen den standardisierten Normvorschriften entspricht und bei dem die Bedienung für und während der Entnahme der Kassette einhändig durchführbar ist. Die Nachteile der vorhin beschriebenen Behälter bleiben jedoch bestehen.

Aus FR-A-24 01 783 ist ein Behälter bekannt in den unter anderem Magazine mit Magnetbandkassetten einsteckbar und schwenkbar gelagert sind. Maßgebend für das Archivsystem ist jedoch allein die Größe des Behälters, der die Zahl der aufzunehmenden Magazine bestimmt. In DE-OS 21 45 718 ist ein archivierbares, zusammensetzbares Spezialmagazin für Kassetten beschrieben. Nachdem Kompaktkassetten in ihrem Standardetui nach NL-A-64 04 046 angeboten werden, müßte dieses Etui bei Verwendung des Magazins der genannten Druckschrift weggeworfen werden. Ferner ist in GB-A-20 63 651 eine um eine Achse schwenkbare Halterungsvorrichtung für eine Mehrzahl von Standardetuis beschrieben wobei der taschenförmige Teile des Etuis von einer Schiene festgehalten wird und beim Ausschwenken des Etuis in die horizontale Lage sich der Deckel des Etuis öffnen läßt. Der Raumbedarf des Archivsystems ist bezogen auf das Etui relativ groß und daher für die Verwendung im Kraftfahrzeug wenig geeignet. Ebenso ist das Archivsystem gegen Erschütterungen beim Fahren nicht arretierbar.

Der Erfindung liegt daher die Aufgabe zu Grunde, ein Archivsystem für Kassetten zu schaffen, bei dem das handelsübliche Etui für Kompaktkassetten in das System mit einbezogen ist, und eine einfache Handhabung, vor allem auch im Kraftfahrzeug, erlaubt.

Erfindungsgemäß wird diese Aufgabe durch eine zusammensteckbare Halterung gelöst, wobei das Etui an den beiden Schmalseiten nahe dem auf diesen Seiten angebrachten Etuischarnier oder Zentrisch mit diesem mit je einer Bohrung versehen ist, die mit Lagerzapfen eines Lagerbügels, der das Etui aufnimmt als Gelenk zusammen wirken. Der Lagerbügel selbst ist als Trog ausgebildet, dessen Vorder- und/oder Rückwand als Anschlag des Schwenkbereichs des Etuis begrenzen. Ferner sind an den Seitenwänden des Lagerbügels über Stege Kupplungszylinder angespritzt. Auf den gegenüberliegenden Seiten des Lagerbügels sind in den Seitenwänden Schlüssellöcher angeordnet, so daß die Kupplungszylinder eines Lagerbügels in die Schlüssellöcher eines zweiten Bügel einsteckbar sind.

Durch die erfindungsgemäße Aufhängung des Etuis in einem Lagerbügel läßt sich die Kassette nach dem Umklappen nach vorne mit einer Hand aus dem Etui entnehmen, so daß bei Anbringung eines derartigen Magazins insbesondere im Kraftfahrzeug der Fahrer von der Beobachtung des Straßenverkehrs nicht abgelenkt wird. Zum Aufbau eines Archives lassen sich durch die Steckverbindungen mehrere Lagerbügel zu Reihen zusammenstecken. Vorteilhafterweise wird die Titelbezeichnung innerhalb der Deckelseite des Etuis angebracht, wodurch sich durch die Schrägstellung und die Umklappbarkeit des Etuis in dem Lagerbügel jeder gewünschte Titel leicht auffinden läßt. Diese Möglichkeiten waren mit dem Normetui bisher nicht gegeben. Weitere Details der Erfindung sind aus den abhängigen Ansprüchen und der Beschreibung zu entnehmen.

Die Erfindung wird an Hand von Zeichnungen näher erläutert und zwar zeigen

Figur 1 eine Seitenansicht einer Reihe von erfindungsgemäß in Lagerbügel eingehängten Etuis

Figur 2 eine Vorderansicht eines in einen Lagerbügel eingehängten Etuis

Figur 3 eine Aufsicht zweier ineinander gesteckter Lagerbügel mit Etui

Figur 4 einen Schnitt durch das Lager des Etuis mit zentrischer Anordnung der Lager zum Lagerbügel

Figur 5 eine perspektivische Ansicht eines Faltzuschnittes zur Aufnahme eines Etuis und Lagerbügels

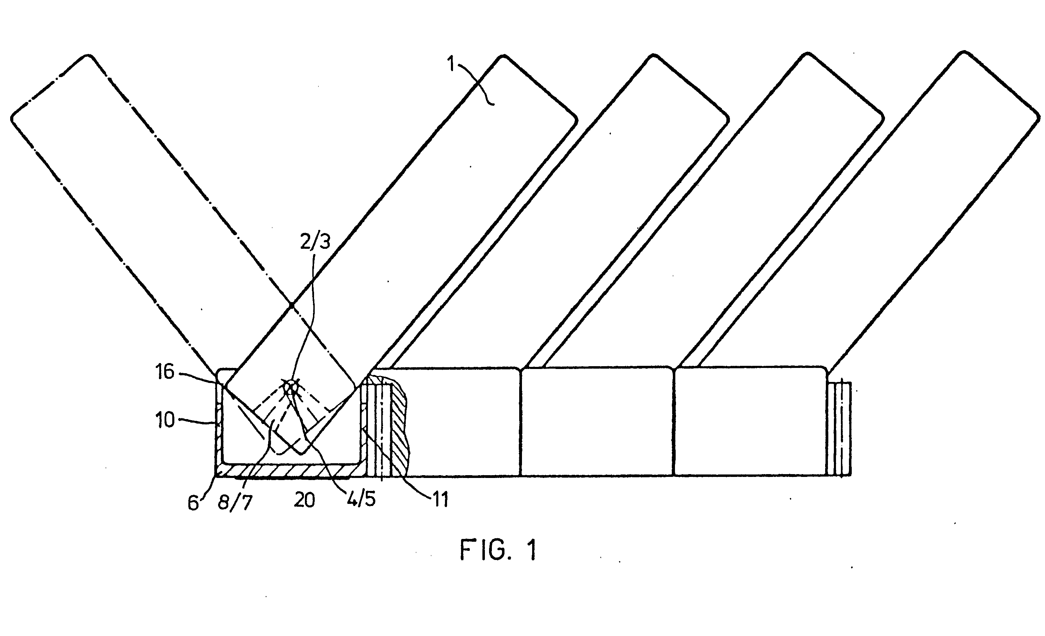

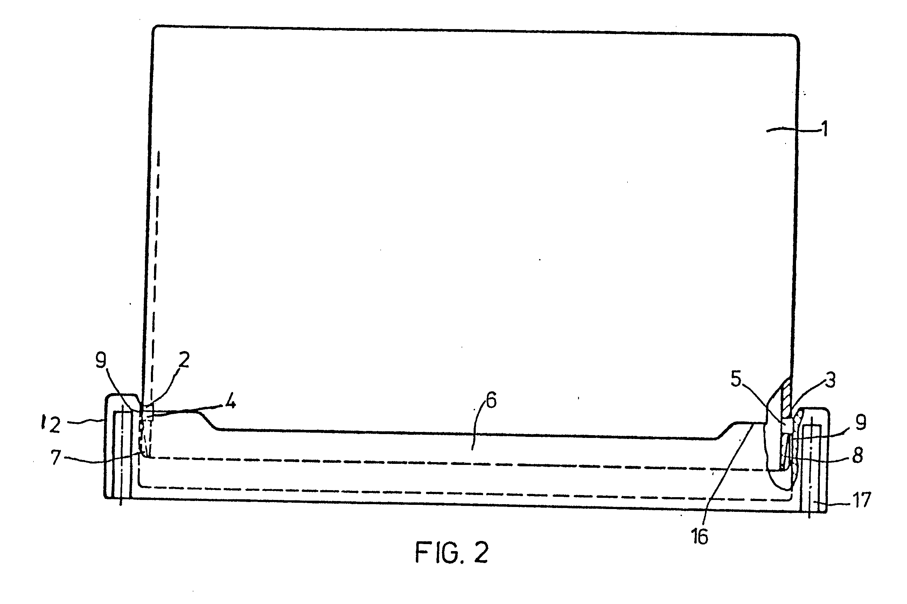

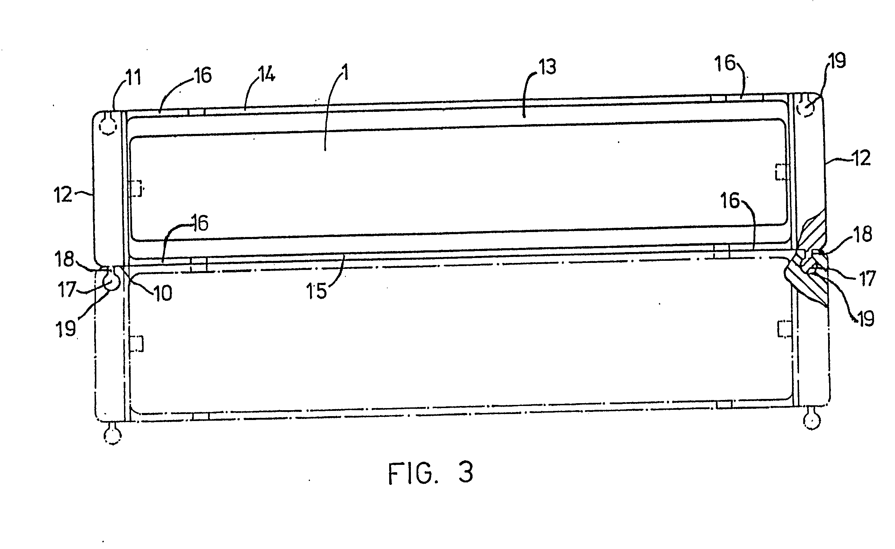

Das zusammensetzbare Archivsystem, wie in Fig. 1-3 gezeigt, besteht aus zwei Grundteilen: Aus einem Etui 1 mit taschenförmigem Deckel (Prinzip Philips) und aus einem Lagerbügel 6. Das Etui 1 besteht aus einem offenen Unterteil mit zwei Seitenwänden, einer Stirnwand und einem Boden, der nur über einen Teil der Länge der Seitenwand ausgebildet ist und dementsprechend sich die Seitenwände über den Boden hinaus erstrecken, sowie aus einem taschenförmigen Deckel, der so gestaltet ist, daß er zusammen mit dem Unterteil einen geschlossenen Behälter bildet, und aus einem Scharnier zwischen Unterteil und Deckel. Das Etui wird fast ausschließlich für die Aufbewahrung von Magnetbandkompaktkassetten verwendet. Nach der Erfindung enthält das Etui 1 (Fig. 1 und 2) an den Schmalseiten nahe dem Etuischarnier oder zentrisch mit diesem je eine Bohrung 2, 3, die mit Lagerzapfen 4, 5 eines Lagerbügels 6 als Gelenk zusammenwirken. Die Bohrungen sind mit Einlaufschrägen 7, 8 zur leichten Montage des Etuis am Lagerbügel versehen. An den Einlaufschrägen gleiten die Lagerzapfen hoch, bis sie durch die Federung der Seitenwände 9 in die Bohrungen einspringen. Der Lagerbügel selbst ist im einfachsten Fall als Trog ausgebildet, dessen Vorder- 10 und Rückwand 11 nicht höher ist als die Dicke des Etuis. Die Seitenwände 12 des Troges schließen an die Seitenwände des Etuis an und die Bodenfläche (Fig. 3, 13) des Troges ist wegen der Bewegbarkeit des Etuis etwas breiter als die Dicke des Etuis. Die Lagerzapfen sind in einer Höhe angebracht, daß das über die Bohrungen verbundene Etui innerhalb des Troges geschwenkt werden kann. Die Oberkanten 14, 15 der Vorder- und Rückwand des Troges sind in Bezug auf die Anschläge 16 gerade ausgebildet oder können, wie Fig. 2 zeigt, zurückgesetzt sein und begrenzen den Schwenkbereich des Etuis. So läßt sich das Etui nach beiden Seiten um ca. 45° um die gemeinsame Lagerachse schwenken. Zur Entnahme wird das Etui nach vorne geschwenkt, der Deckel, dessen Scharnier sich nahe des Troges befindet, geöffnet und die Kassette entnommen. Dies ist mit einer Hand möglich. Zum leichteren Öffnen des Deckels kann sich am Rand der Vorderseite des Etuis in bekannter Weise eine Einkerbung befinden. Zum Aufbau des Archivs lassen sich mehrere Lagerbügel durch eine Steckverbindung zu Reihen zusammenmontieren. Zu diesem Zweck sind auf einer Seite des Lagerbügels Kupplungszylinder 17 über Stege 18, Fig. 3 angespritzt, die in Schlüssellöcher 19 eingeschoben werden können, die sich auf der gegenüberliegenden Seite am Lagerbügel befinden. Somit lassen sich die Lagerbügel zu Archivreihen mit beliebiger Anzahl von Lagerbügeln und damit von Etuis zusammenstellen. Durch Anbringung eines Doppelklebebandes 20, Fig. 1 auf der Unterseite des Lagerbügels kann ein Archiv in jeder Lage befestigt werden. Ein weiterer, nicht dargestellter Vorschlag sieht vor, Steckverbindungen auch an den Außenseiten des Lagerbügels vorzusehen, um ganze Felder miteinander zu verbinden.

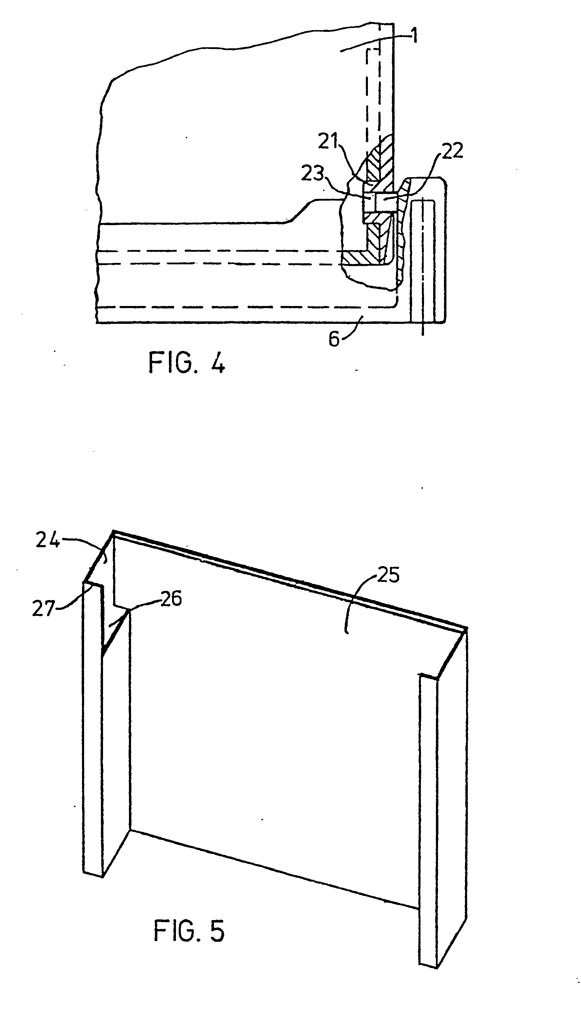

In Fig. 4 ist das Lager des Etuis mit zentrischer Anordnung desselben zum Lagerbügel gezeigt. Bei dieser Anordnung erhält der Lagerbolzen 21 des Deckelscharniers des Etuis einen vergrößerten Lagerdurchmesser, so daß der Lagerzapfen 22 des Lagerbügels in einer zentrisch angeordneten Bohrung 23 des Lagerbolzens geführt ist. Der Vorteil dieser speziellen Lagerung liegt darin, daß beim Öffnen des Etuis keine Relativbewegungen vom Gehäuseboden zum Deckel entstehen.

Wie in Fig. 5 gezeigt, läßt sich eine Einheit des erfindungsgemäßen Archivsystems bequem in einer flachen Verpackung unterbringen. Sie besteht aus einem Faltzuschnitt 24 in der Dicke des Etuis. Der Faltzuschnitt hat eine Rückseite 25 und ist an den Seiten aufgebogen, in der Länge der Breitseite des Etuis und zwar in Form eines offenen Hohlquaders 26 und ist darüber in der Höhe des Lagerbügels als U-förmige Schiene 27 ausgebildet. Dadurch ist es möglich, die Kupplungszylinder an beiden Seiten in die offenen Flächen des Hohlquaders hineinzustecken, wodurch der Falzzuschnitt zusammengehalten wird.

Mit dem erfindungsgemäßen Archivsystem braucht nicht — wie bei den bisherigen Sonderausstattungen — das übliche verwendete Etui, um zu einem raumsparendem Ablagesystem zu kommen, weggeworfen werden, sondern ist selbst ein Teil des Archivsystems. Durch die Schrägstellung und Umklappbarkeit der hintereinander sortierten Etuis wird auch eine sehr gute Übersicht der Titel der bespielten Kassetten erreicht. Beschriftet man die Kassette oder legt das Titelblatt zwischen Kassette und Deckel, so können z. B. bei hinterer Schräglage aller Etuis die gesamten Haupttitel der Kassetten abgelesen werden. Schwenkt man das zweite Etui oder eines der folgenden nach vorne, lassen sich darüberhinaus weitere Informationen des Titelblattes des aufgeschlagenen Etuis bequem ablesen.

**Patentansprüche**

1. Zusammensteckbare Halterung für mit Magnetbandkassetten belegte Etuis, wobei das Etui an den beiden Schmalseiten nahe dem auf diesen Seiten angebrachten Etuischarnier oder zentrisch mit diesem mit je einer Bohrung versehen ist, dadurch gekennzeichnet, daß die Bohrungen (2, 3) mit Lagerzapfen (4, 5) eines Lagerbügels (6) zur Aufnahme des Etuis als Gelenk zusammenwirken und der Lagerbügel als Trog ausgebildet ist, dessen Vorder- (10) und/oder Rückwand (11) als Anschlag (16) dienen, an denen das Etui mit seinen Außenflächen anschlägt und die den Schwenkbereich des Etuis begrenzen und daß am Rücken der Seitenwände (12) des Lagerbügels über Stege (18) Kupplungszylinder (17) angespritzt sind und auf der gegenüberliegenden Seite des Lagerbügels in der Vorderfront der Seitenwände sich Schlüssellöcher (19) befinden, so daß der Kupplungszylinder des Lagerbügels in die Schlüssellöcher eines zweiten Lagerbügels einsteckbar ist.

2. Zusammensteckbare Halterung nach Anspruch 1 dadurch gekennzeichnet, daß die Lagerbohrungen mit Einlaufschrägen (7, 8), die von der Bohrung nach der seitlichen Unterkante des Etuis verlaufen, versehen sind.

3. Zusammensteckbare Halterung nach Anspruch 1 dadurch gekennzeichnet, daß der Lagerzapfen (21) des Etuis eine Bohrung (23) aufweist, in die der Lagerzapfen (22) des Bügels eingreift.

4. Zusammensetzbare Halterung nach Anspruch 1 dadurch gekennzeichnet, daß die Bohrungen an den Schmalseiten des Etuis nahe des Deckelgelenks angeordnet sind.

5. Zusammensteckbare Halterung nach Anspruch 1-2 dadurch gekennzeichnet, daß die Bodenfläche (13) der Halterung größer ist als die Dicke des Etuis.

6. Zusammensteckbare Halterung nach Anspruch 1-3 dadurch gekennzeichnet, daß die Lagerzapfen des Lagerbügels in einer Höhe angebracht sind, daß das über die Lagerbohrungen verbundene Etui innerhalb des Lagerbügels schwenkbar ist.

7. Zusammensteckbare Halterung nach Anspruch 1-6 dadurch gekennzeichnet, daß die Seitenwände des Lagerbügels einen Abstand zueinander besitzen derart, daß diese an die Seitenwände des Etuis anschließen.

8. Zusammensteckbare Halterung nach Anspruch 1-7 dadurch gekennzeichnet, daß Vorderwand und Rückwand des Lagerbügels nicht höher sind als die Dicke des Etuis, so daß Etui und Lagerbügel in einer raumsparenden Verpackung gemeinsam unterzubringen sind.

9. Zusammensteckbare Halterung nach Anspruch 1-8 dadurch gekennzeichnet, daß an den nach außen weisenden Seitenwänden auf der einen Seite über Stege Kupplungszylinder und auf der gegenüberliegenden Seitenwand Schlüssellöcher vorgesehen sind, so daß mehrere Archivflächen seitlich untereinander verbindbar sind.

10. Zusammensteckbare Halterung nach Anspruch 1-8 dadurch gekennzeichnet, daß der Lagerbügel auf das Etui mit den Schmalseiten aufgesetzt wird, so daß der Kupplungszylinder am Etui anliegt und beide von einem seitlich aufgebogenen Faltzuschnitt (24) zusammengehalten sind, wobei die Seitenwände des Faltzuschnittes in der Länge der Breitseite des Etuis als Hohlquader (26) und in der Länge der seitlichen Seitenwand als U-Schiene (27) ausgebildet sind, so daß die Kupplungszylinder in die oben offenen Hohlquader hineinragen.

## Claims

1. An assemblable holder for cases containing magnetic tape cassettes, each of the two narrow sides of the case being provided with a hole near or in a central position in relation to the case hinge located on each of these sides, characterised in that the holes (2, 3) interact, in the manner of a hinge, with supporting pins (4, 5) of a supporting bracket (6) for holding the case and the supporting bracket has the shape of a trough, the front (10) and/or rear walls (11) of which serve as stops (16) against which the external surfaces of the case are arrested and which limit the field of swing of the case, and in that coupling cylinders (17) are injection-moulded, via connecting pieces (18), on to the back face of the side walls (12) of the supporting bracket and keyholes (19) are located on the opposite side of the supporting bracket, in the front face of the side walls, so that the coupling cylinder of the supporting bracket can be inserted into the keyholes of a second supporting bracket.

2. An assemblable holder according to Claim 1, characterised in that the supporting holes are provided with lead-in slopes (7, 8) which extend from the hole to the lateral lower edge of the case.

3. An assemblable holder according to Claim 1, characterised in that the supporting pin (21) of the case has a hole (23) into which the supporting pin (22) of the bracket engages.

4. An assemblable holder according to Claim 1, characterised in that the holes are arranged on the narrow sides of the case, near the lid hinge.

5. An assemblable holder according to Claim 1-2, characterised in that the bottom surface (13) of the holder is larger than the depth of the case.

6. An assemblable holder according to Claim 1-3, characterised in that the supporting pins of the supporting bracket are located at such a height that the case attached via the supporting holes can be swung within the supporting bracket.

7. An assemblable holder according to Claim 1-6, characterised in that the side walls of the supporting bracket are at such a distance from each other that they are adjacent to the side walls of the case.

8. An assemblable holder according to Claim 1-7, characterised in that the front and rear walls of the supporting bracket are not higher than the depth of the case, so that the case and the supporting bracket can be jointly contained inside a compact packing.

9. An assemblable holder according to Claim 1-8, characterised in that, on the outer side walls, coupling cylinders are provided on the one side, via connecting pieces, and keyholes are provided on the opposite side wall, so that several storing holder surfaces can be laterally interconnected.

10. An assemblable holder according to Claim 1-9, characterised in that the supporting bracket is placed on the case with its narrow sides, so that the coupling cylinder is adjacent to the case and both are held together by a folded cutout (24) which is bent upwards at the sides, the side walls of the folded cutout being in the form of a hollow quadrangular prism (26) over the length of the broad side of the case and in the form of a U-bar (27) over the length of the lateral side wall, so that the coupling cylinders project into the hollow quadrangular prisms (26) which are open at the top.

**Revendications**

1. Support solidarisable par emboîtement et équipant des boîtiers garnis de cassettes de bandes magnétiques, le boîtier étant percé, sur ses deux côtés étroits, d'un trou respectif ménagé à proximité de la charnière du boîtier installée sur lesdits côtés, ou bien concentriquement à cette charnière, caractérisé par le fait que les trous (2, 3) coopèrent, en tant qu'articulation, avec des tourillons (4, 5) d'un étrier de support (6) pour recevoir le boîtier, et cet étrier de support est réalisé sous la forme d'une auge dont la paroi antérieure (10) et/ou la paroi postérieure (11) servent de butées (16), contre lesquelles le boîtier est appliqué par ses faces externes et qui limitent la plage de pivotements de ce boîtier ; et par le fait que des cylindres d'accouplement (17), venus de moulage par injection, sont reliés par l'intermédiaire de membrures (18) au dos des parois latérales (12) de l'étrier de support, et des trous de serrure (19) sont pratiqués sur la face opposée de l'étrier de support, dans la partie frontale des parois latérales, de sorte que le cylindre d'accouplement de l'étrier de support peut être emboîté dans les trous de serrure d'un second étrier de support.

2. Support solidarisable par emboîtement selon la revendication 1, caractérisé par le fait que les trous de montage sont pourvus de biseaux d'introduction (7, 8), qui s'étendent du trou vers l'arête latérale inférieure du boîtier.

3. Support solidarisable par emboîtement selon la revendication 1, caractérisé par le fait que le pivot (21) du boîtier présente un perçage (23), dans lequel s'engage le tourillon (22) de l'étrier.

4. Support solidarisable par emboîtement selon la revendication 1, caractérisé par le fait que les trous pratiqués dans les côtés étroits du boîtier sont disposés à proximité de l'articulation du couvercle.

5. Support solidarisable par emboîtement selon les revendications 1-2, caractérisé par le fait que la face (13) du fond de ce support est plus grande que l'épaisseur du boîtier.

6. Support solidarisable par emboîtement selon les revendications 1-3, caractérisé par le fait que les tourillons de l'étrier de support sont situés à une hauteur telle que le boîtier, relié par l'intermédiaire des trous de montage, puisse pivoter à l'intérieur de l'étrier de support.

7. Support solidarisable par emboîtement selon les revendications 1-6, caractérisé par le fait que les parois latérales de l'étrier de support sont mutuellement espacées d'une distance telle qu'elles se raccordent aux parois latérales du boîtier.

8. Support solidarisable par emboîtement selon les revendications 1-7, caractérisé par le fait que la paroi antérieure et la paroi postérieure de l'étrier de support ne sont pas plus hautes que l'épaisseur du boîtier, de telle sorte que le boîtier et l'étrier de support puissent être logés conjointement dans un emballage de faible encombrement.

9. Support solidarisable par emboîtement selon les revendications 1-8, caractérisé par le fait que des cylindres d'accouplement reliés par des membrures sont prévus d'un côté sur les parois latérales tournées vers l'extérieur, des trous de serrure étant ménagés dans la paroi latérale opposée, de façon que plusieurs surfaces d'archivage puissent être reliées latéralement les unes aux autres.

10. Support solidarisable par emboîtement selon les revendications 1-9, caractérisé par le fait que l'étrier de support est placé sur le boîtier par ses côtés étroits, de façon que le cylindre d'accouplement porte contre le boîtier et que l'un et l'autre soient solidarisés par un tronçon replié (24) coudé latéralement vers le haut, les parois latérales de ce tronçon coudé étant réalisées en tant que parallélépipède creux (26) sur la longueur du côté large du boîtier et en tant que rail (27) en U sur la longueur de la paroi latérale, si bien que les cylindres d'accouplement s'engagent dans les parallélépipèdes creux ouverts vers le haut.

FIG. 1

0 085 911

FIG. 2

FIG. 3

FIG. 4

FIG. 5